# EUROPÄISCHE PATENTSCHRIFT

(11) **EP 4 055 280 B1**
(45) Veröffentlichungstag und Bekanntmachung des Hinweises auf die Patenterteilung: **16.04.2025**
(21) Anmeldenummer: 20824437.6
(22) Anmeldetag: 06.11.2020
(51) Int. Cl.: F15B 15/14, B23K 26/28

(54) **ARBEITSZYLINDER**
WORKING CYLINDER
CYLINDRE DE TRAVAIL

(30) Priorität: 08.11.2019 DE 202019004569 U
(43) Veröffentlichungstag der Anmeldung: 14.09.2022
(73) Patentinhaber: Bümach Engineering International B.V., 7826 TA Emmen (NL)
(72) Erfinder: BUETER, Josef, 49733 Haren/Altenberge (DE)
(74) Vertreter: Weihrauch, Frank
(86) Internationale Anmeldenummer: PCT/DE2020/000269
(87) Internationale Veröffentlichungsnummer: WO 2021/089071

(56) Entgegenhaltungen:
- EP-A1- 3 260 705
- DE-A1- 102007 004 666
- DE-A1- 4 041 992
- US-A1- 2004 143 953

## Beschreibung

Die Erfindung betrifft einen geschweißten Arbeitszylinder.

Arbeitszylinder sind als solche aus dem Stand der Technik in unterschiedlichen Ausbildungen bekannt.

Alle derartigen Arbeitszylinder weisen ein Zylinderrohr sowie Verschlussteile auf. Die Fertigung solcher Arbeitszylinder erfolgt gemäß dem Stand der Technik in der Regel durch ein Verschrauben der Verschlussteile mit dem Zylinderrohr. Diese Arbeitszylinder werden in dem Stand der Technik daher auch als Schraubzylinder bezeichnet.

Ferner ist es aus dem Stand der Technik bekannt, das Bodenverschlussteil mit dem Zylinderrohr durch MAG-Schweißen zu verbinden und dann lediglich das Führungsverschlussteil zu verschrauben.

Das Gewinde von Zylinderrohr und Verschlussteilen wird in der Regel durch ein spanendes Verfahren erzeugt.

Sowohl Schraubzylinder als auch Zylinder mit Verschraubung nur eines Verschlussteils und MAG-Verschweißung des anderen Verschlussteils werden nach dem Stand der Technik in hoher Qualität bereitgestellt und haben sich als hochwertige und zuverlässige Produkte bewährt.

Fertigungsseitig ist hierbei festzustellen, dass insbesondere für das Zylinderrohr eine Zulage der Materialstärke, also der Rohrwandstärke, für das subtraktiv einzubringende Gewinde vorgesehen werden muss, weil das Gewinde das Zylinderrohr unvermeidlich schwächt. Damit liegt dann aber eine Rohrwandstärke vor, die für die Aufnahme der Kräfte im Arbeitsbetrieb, insbesondere der Kräfte durch den Betriebsdruck des Fluids, erheblich überdimensioniert ist. Dies führt nachteilig zu einem erhöhten Materialverbrauch und zu einem erhöhten Endgewicht des Differenzialarbeitszylinders.

Die spanenden Verfahren zur Erzeugung des Gewindes erfordern nachteilig zudem eine hohe Präzision und sind somit sehr anspruchsvoll in der Fertigung.

Ferner muss zur Erlangung der Dichtheit der Zylinder zwischen dem Zylinderrohr und dem jeweiligen Verschlussteil regelmäßig zusätzlich eine Dichtung eingebracht werden.

Weiterhin erfordert die Endmontage einen hohen Zeitaufwand und qualifizierte Arbeitskräfte.

Nachteilig ist es zudem, dass zusätzliche Mittel gegen ein Lösen der Schraubverbindung vorgesehen werden müssen. Letztlich ist es nachteilig, dass infolge der wechselnden Betriebsdrücke dynamische Belastungen an den Gewinden vorliegen, welche deren Lebensdauer begrenzen.

Durch die DE 40 41 992 A1 wird vorgeschlagen, als Zylinderrohr ein gezogenes Hohlprofil zu verwenden und als Verschlussteile einen Deckel und ein Bodenteil fluchtend einzusetzen und stirnseitig in dem Passungsspalt ringförmig ohne Schweißzusatzstoff zu verschweißen. Nachteilig ist hierbei, dass infolge von Beulungskräften die Schweißnaht erheblich belastet wird.

Ein weitere Lösung beschreibt die DE 10 2007 004 666 A1 für eine Gasdruckfeder. In ein Zylinderohr werden die Verschlussteile eingesetzt. Sie weisen einen überstehenden Kranz auf, der zusammen mit den ringförmigen Stirnflächen des Zylinderohrs jeweils einen radial gerichteten Passungspalt aufweisen, der anschließend laserverschweißt wird. Gemäß dem Anwendungszweck handelt es sich um eine Kopplung, die lediglich für geringe Belastungen ausgelegt ist.

Das Dokument US 2004 143953 A1 offenbart die stoffschlüssige Kopplung eines Verschlussteils mit einem Zylinderrohrs eines hydraulischen Arbeitszylinders mittels einer Schweißnaht. Die Schweißnaht ist als eine massive Schweißnaht mit Schweißzusatzstoff ausgebildet, so dass nachteilig durch ein hoher Wärmeeintrag vorliegt, der thermisch empfindliche Teile hoch belastet.

Ferner offenbart auch die EP 3 260 705 A1 ein an einem Zylinderrohr angeordnetes Verschlussteil, das durch eine radial gerichtete Schweißnaht verschweißt ist. Nachteilig unterliegt die Schweißnaht sowohl einer Zug- als auch Scherbelastung.

Die Aufgabe der Erfindung ist es, einen Arbeitszylinder aufzuzeigen, welcher eine besonders hohe Qualität aufweist, sowie Material sparend, einfach und somit kostengünstig herstellbar ist.

Die Aufgabe wird durch die im Patentanspruch 1 aufgeführten Merkmale gelöst. Bevorzugte Weiterbildungen ergeben sich aus den Unteransprüchen.

Erfindungsgemäß weist der Arbeitszylinder ein Zylinderrohr, ein erstes und ein zweites Verschlussteil und eine Kolbeneinheit auf. Das erste Verschlussteil und das zweite Verschlussteil werden nachfolgend zusammengefasst auch als die Verschlussteile bezeichnet.

Der aus diesen Grundkomponenten gebildete erfindungsgemäße Arbeitszylinder kann in unterschiedlichen Ausbildungen vorliegen. Insbesondere kann es sich bei dem Arbeitszylinder um einen Differenzialarbeitszylinder, einen Plungerzylinder, einen Gleichgangzylinder, einen Teleskopzylinder, einen Zugzylinder oder auch um einen pneumatischen Arbeitszylinder handeln. Soweit der Arbeitszylinder als Gleichgangzylinder ausgebildet ist, wird er nachfolgend auch als Lenkzylinder bezeichnet. Als Arbeitszylinder im Sinne der vorliegenden Erfindung werden insbesondere ferner Speicherzylinder, Gasfederzylinder und hydraulische Stoßdämpfer verstanden.

Ein erfindungsgemäßer Arbeitszylinder kann insbesondere doppelt wirkend oder einfach wirkend ausgebildet sind. Bei einem Differenzialarbeitszylinder beispielsweise handelt es sich um einen doppelt wirkenden hydraulischen Arbeitszylinder mit zwei Arbeitsräumen, wobei in den beiden Arbeitsräumen unterschiedlich große Angriffsflächen des Kolbens vorliegen. Bei gleichem Betriebsdruck wirken somit in den beiden Betätigungsrichtungen auf den Kolben unterschiedlich große Kräfte. Bei einem Gleichgangzylinder wird im Unterschied zu einem Differenzialarbeitszylinder die Kolbenstange durch beidseitig angeordnete Führungsverschlussteile geführt, so dass gleich große Angriffsflächen des Kolbens vorliegen und somit bei gleichem Betriebsdruck in beiden Betätigungsrichtungen gleich große Kräfte wirken, so dass Gleichgangzylinder insbesondere als Lenkzylinder eingesetzt werden. Bei einem Plungerzylinder handelt es sich dagegen um einen einfach wirkenden Arbeitszylinder, bei dem das Druckmedium den Kolben als einen Volumenkörper verdrängt und somit dessen Ausfahrtbewegung bewirkt. Entsprechendes gilt auch für den Telekopzylinder, wobei hier mehrere Zylinderrohre ineinandergeschoben vorliegen und so besonders lange Arbeitsbewegungen ermöglichen.

Das Zylinderrohr ist in an sich bekannter Weise hohlzylindrisch ausgebildet und weist erfindungsgemäß ein erstes Zylinderrohrende und ein zweites Zylinderrohrende auf. An dem ersten Zylinderrohrende ist nach erfolgter Montage das erste Verschlussteil und an dem zweiten Zylinderrohrende das zweite Verschlussteil angeordnet. Dabei sind beide Zylinderrohrenden vorzugsweise gleich gefertigt. So besitzen die beiden Zylinderrohrenden vorzugsweise angeschrägte axiale Stirnflächen, wobei die Anschrägungen den selben Winkel aufweisen. Die axialen Stirnflächen weisen somit vorzugsweise eine gleiche Querschnittsfläche auf.

Es ist aber auch möglich, die Zylinderrohrenden unterschiedlich auszubilden.

Das erste Verschlussteil ist erfindungsgemäß an dem ersten Zylinderrohrende angeordnet. Bevorzugt handelt es sich bei dem ersten Verschlussteil um ein Führungsverschlussteil. Als Führungsverschlussteil wird dabei ein Verschlussteil verstanden, welches eine Kolbeneinheit gleitend und dichtend aufnimmt. Dabei kann die Kolbeneinheit beispielsweise bei einem Differenzialarbeitszylinder aus einem Kolben und einer Kolbenstange bestehen, wobei dann die Kolbenstange von dem Führungsverschlussteil aufgenommen wird. Bei einem Plungerzylinder liegt die Kolbeneinheit als ein volumenbildender Kolben vor, auch als Tauchkolben bezeichnet, der von dem Führungsverschlussteil aufgenommen wird.

Das erste Verschlussteil ist so ausgebildet, dass es eine Kontaktfläche besitzt, welche beim Ansetzen an das erste Zylinderrohrende an einer korrespondierenden weiteren Kontaktfläche des ersten Zylinderrohrendes anliegt. Diese Kontaktflächen umlaufen bevorzugt das erste Verschlussteil sowie das Zylinderrohr vollständig. Somit ergibt sich eine durchgehende Ringfläche, an welcher das erste Verschlussteil am ersten Zylinderrohrende anliegt. Soweit die Ringfläche schräg geneigt ist, liegt sie im geometrischen Sinne als Kegelstumpfmantelfläche vor. Nachfolgend wird diese Fläche zur Vereinfachung unabhängig von der geometrischen Ausbildung vereinfacht lediglich als Ringfläche bezeichnet.

Das zweite Verschlussteil ist erfindungsgemäß am zweiten Zylinderrohrende angeordnet. Die Beschreibungsinhalte zu dem ersten Verschlussteil in dessen Beziehung zu dem ersten Zylinderrohrende gelten in entsprechender Weise für das zweite Verschlussteil in dessen Beziehung zu dem zweiten Zylinderrohrende. Das zweite Verschlussteil ist hinsichtlich der Kontaktfläche analog zum ersten Verschlussteil ausgebildet. Bevorzugt handelt es sich bei dem zweiten Verschlussteil um ein Bodenverschlussteil, welches dann axial dem Kolben der Kolbeneinheit gegenüberliegt sowie den mindestens einen Arbeitsraum des erfindungsgemäßen Arbeitszylinders axial begrenzt.

Der erfindungsgemäße Arbeitszylinder weist ferner die Kolbeneinheit auf. Je nach Arbeitszylinderart kann die Kolbeneinheit aus einem Kolben und einer Kolbenstange gebildet sein - wie dies beispielsweise bei einem Differenzialarbeitszylinder oder einem Gleichgangzylinder der Fall ist - oder allein durch einen Kolben gebildet sein - wie dies beispielsweise bei einem Plungerzylinder der Fall ist - oder andere Ausbildungen aufweisen.Soweit die Kolbeneinheit einen Kolben und eine Kolbenstange aufweist, stehen der Kolben und die Kolbenstange relativ zu einander in einer festen Lagebeziehung. Vorzugsweise sind der Kolben und die Kolbenstange fest miteinander gekoppelt. Die Verbindung ist dabei vorzugsweise stoffschlüssig als Schweißverbindung ausgebildet. Kolben und Kolbenstange können-auch lösbar gekoppelt sein. In besonderen Fällen ist es aber auch möglich, dass die Kolbeneinheit einstückig ausgebildet ist und somit Kolben und Kolbenstange Abschnitte eines monolithischen Bauteils sind.

Erfindungsgemäß bilden das Zylinderrohr und die Verschlussteile im montierten Zustand einen Zylinderinnenraum aus. Sind Zylinderrohr und Verschlussteile zusammengefügt, begrenzen deren innenliegenden Oberflächenabschnitte den Zylinderinnenraum. Der Zylinderinnenraum führt dabei bis zu der jeweiligen Laserringschweißnaht.

Weiterhin bildet in dem erfindungsgemäßen Arbeitszylinder die Kolbeneinheit in dem Zylinderinnenraum mindestens einen Arbeitsraum aus. Dieser wird durch das Zylinderrohr, ein Verschlussteil und die Kolbeneinheit umgrenzt. Die Kolbeneinheit ist axial verschieblich angeordnet, wobei die Hauptlängsachse des Zylinderrohrs und die axialen Bewegungsrichtung der Kolbeneinheit übereinstimmen. Hierbei durchsetzt die Kolbeneinheit gleitend und dichtend zumindest abschnittsweise vorzugsweise das erste Verschlussteil. Dem Arbeitsraum ist ein Druckmediumanschluss zugeordnet, über den das Druckmedium in den Arbeitsraum gelangen kann oder aus diesem herausgeleitet werden kann und der Arbeitsraum somit mit einem Druck beaufschlagbar ist. Das Druckmedium kann als hydraulisches oder pneumatisches Druckmedium vorliegen.

Liegt der erfindungsgemäße Arbeitszylinder beispielsweise in der Bauform eines Differenzialarbeitszylinders vor, gilt zudem Folgendes.

Der Kolben der Kolbeneinheit ist in dem Zylinderinnenraum angeordnet und trennt den Zylinderinnenraum in einen Kolbenbodenarbeitsraum, nachfolgend auch verkürzt als Kolbenbodenraum bezeichnet, und einen Kolbenstangenarbeitsraum.

Dabei befindet sich der Kolbenbodenraum zwischen dem Kolben und dem zweiten Verschlussteil, hier ausgebildet als Bodenverschlussteil. Der Kolbenstangenarbeitsraum befindet sich auf der Seite der Kolbenstange zwischen dem Kolben und dem ersten Verschlussteil, hier ausgebildet als Führungsverschlussteil. Der mindestens eine Arbeitsraum liegt somit als der Kolbenstangenarbeitsraum vor. Zudem bildet der Kolbenbodenarbeitsraum einen weiteren Arbeitsraum.

Der Kolben ist axial verschieblich und so im Zylinderinnenraum angeordnet, dass sich die Hauptlängsachsen von Kolben und Zylinderrohr überlagern.

Die Druckmediumanschlüsse sind so am Arbeitszylinder angeordnet, dass der Kolbenbodenarbeitsraum und der Kolbenstangenarbeitsraum mit einem Betriebsdruck beaufschlagt werden können.

Der Kolben kann zusätzlich verschiedene Führungs-, Dichtungs- bzw. Kolbenringe aufweisen. Verschiedene Ausführungen eines Kolbens für einen Arbeitszylinder sind als solche aus dem Stand der Technik bekannt.

Die Kolbenstange durchsetzt erfindungsgemäß gleitend das erste Verschlussteil, hier ausgebildet als Führungsverschlussteil.

Die Kolbenstange ist gleitend im Führungsverschlussteil gelagert, wobei das Führungsverschlussteil ausgebildet ist, ein Austreten des Druckmediums, nachfolgend auch als Fluid bezeichnet, zu verhindern. Dies erfolgt zum Beispiel über entsprechende Ringdichtungen.

Das erste Verschlussteil ist mit dem Zylinderrohr mittels einer ersten umlaufenden Laserringschweißnaht stoffschlüssig verbunden. Das zweite Verschlussteil ist mit dem Zylinderrohr mittels einer zweiten umlaufenden Laserringschweißnaht stoffschlüssig verbunden. Die jeweils miteinander verbundenen Komponenten werden nachfolgend auch zusammengefasst als die Kopplungspartner bezeichnet.

Die beiden Verschlussteile werden im Laserschweißverfahren mit dem Zylinderrohr verbunden. Es handelt sich bei den Laserringschweißnähten um Schmelzschweißverbindungen, ohne dass Schweißzusatzwerkstoffe zugegeben werden.

Durch das Laserschweißen wird vorteilhaft eine sehr schmale, spitz zulaufende Schweißnaht ausgebildet. Der von den seitlichen Flanken der im Wesentlichen V-förmigen Laserschweißnaht aufgespannte spitze Winkel beträgt bevorzugt weniger als 15 Grad und besonders bevorzugt weniger als 10 Grad.

Die beiden Laserringschweißnähte bilden jeweils eine fluiddichte Dichtebene aus. Dies bedeutet, dass die erste Laserringschweißnaht einen Druckmediumdurchtritt an der Verbindungstelle zwischen dem Zylinderrohr und dem ersten Verschlussteil und die zweite Ringschweißnaht einen Druckmediumdurchtritt zwischen dem Zylinderrohr und dem zweiten Verschlussteil verhindert, ohne dass es zusätzlicher Mittel zur Dichtung, wie beispielsweise eines Dichtungsrings, bedarf.

Zylinderrohr und Verschlussteile sowie bevorzugt auch die Kolbeneinheit bestehen jeweils aus einer Metalllegierung und besonders bevorzugt aus einer Stahllegierung. Hierbei kann sich die Materialzusammensetzung der einzelnen Komponenten leicht unterscheiden. Vorzugsweise unterscheiden sich die Massenanteile der Komponenten der Metalllegierung des Zylinders von denen der Verschlussteile um weniger als 10 Gew.-% von der Metalllegierung der Verschlussteile. Somit besitzen Verschlussteile und Zylinderrohr ähnliche physikalische Eigenschaften und lassen sich besonders gut miteinander verschweißen.

Die verwendete Stahllegierung besitzt vorzugsweise einen Kohlenstoffanteil von unter 0,5 Gew.-%. Die Legierungsbestandteile Vanadium, Chrom und Mangan sind einzeln oder kombiniert bevorzugt mit einem Anteil von 0,01 bis 2 Gew.-% enthalten.

Der Arbeitszylinder ist ferner dadurch gekennzeichnet, dass die Laserringschweißnähte (9, 10) jeweils eine Ringschweißnahtmittelachse (13) aufweisen, wobei die Ringschweißnahtmittelachse (13) mit einer Hauptlängsachse (14) des Zylinderrohrs (2) einen Ringschweißnahtneigungswinkel alpha (α) einschließt, wobei alpha (α) 20 bis 70 Grad beträgt, und dass in dem Zylinderinnenraum zwischen dem ersten Verschlussteil und einer Zylinderrohrinnenwandung des Zylinderrohrs an dessen erstem Zylinderrohrende axial beabstandet von der ersten Laserringschweißnaht ein erster umlaufender Dichtring angeordnet ist, der einen ersten druckgetrennten Ringabschnitt ausbildet, der zwischen dem ersten umlaufenden Dichtring und der ersten Laserringschweißnaht angeordnet ist und/oder dass in dem Zylinderinnenraum zwischen dem zweiten Verschlussteil und einer Zylinderrohrinnenwandung des Zylinderrohrs an dessen zweitem Zylinderrohrende axial beabstandet von der zweiten Laserringschweißnaht ein zweiter umlaufender Dichtring angeordnet ist, der einen zweiten druckgetrennten Ringabschnitt ausbildet, der zwischen dem zweiten umlaufenden Dichtring und der zweiten Laserringschweißnaht angeordnet ist.

Es ist gemäß dieser Weiterbildung also mindestens einer Laserringschweißnaht ein umlaufender Dichtring vorgelagert. Vorzugsweise ist beiden Laserringschweißnähten jeweils ein umlaufender Dichtring vorgelagert. Der umlaufende Dichtring wird nachfolgend auch als O-Ring bezeichnet.

Der O-Ring trennt zylinderrauminnenseitig einen Ringabschnitt vor der jeweiligen Laserringschweißnaht von dem übrigen Zylinderinnenraum druckdicht ab. Es wurde überraschend gefunden, dass durch die Ausbildung einer Laserringschweißnaht die Streckenenergie so gering eingestellt werden kann, dass ein thermisch empfindlicher O-Ring auch in einem Nahbereich der Laserringschweißnaht nicht beschädigt wird. Als Nahbereich wird ein axialer Abstand zwischen der Laserringschweißnaht und dem O-Ring verstanden, der geringer als ein Zylinderrohrinnendurchmesser ist und besonders bevorzugt nicht mehr als das Vierfache einer Zylinderrohrwanddicke beträgt.

Der O-Ring bewirkt, das der Ringabschnitt von dem Arbeitsdruck des Druckmediums getrennt ist. Damit handelt es sich bei dem Ringabschnitt um einen axialen Abschnitt des Zylinderrohrs unmittelbar vor und an der Laserringschweißnaht, der von innen nicht mit dem Arbeitsdruck des Druckmediums beaufschlagt wid und somit nicht einer Beulungsbelastung unterliegt. Damit wird vorteilhaft zugleich mit einem sehr einfachen Mittel eine sonst auftretende radiale Belastung der Laserringschweißnaht vermieden. Vielmehr besteht ausschließlich die axiale Belastung. Die axiale Belastung beruht darauf, dass auf die Grundfläche des jeweiligen Verschlussteils der Arbeitsdruck des Druckmediums wirkt. Vorteilhaft wird somit eine mehrachsige Belastung der Laserringschweißnaht und dort eine mehrachsige Materialspannung vermieden.

Zugleich wird durch den vorgelagerten O-Ring ein Schutz des mindestens einen Arbeitsraums oder je nach Arbeitszylinderart bei O-Ringen an beiden Seiten auch beider Arbeitsräume vor Verschmutzungen erreicht. Etwaige Emissionen während des Laserschweißens oder Partikel, die sich im Bereich der Laserschweißnaht von den Kopplungspartnern ablösen könnten, werden in dem jeweiligen Ringabschnitt durch den O-Ring vor einem Übertritt in den Arbeitsraum zurückgehalten.

Erfindungsgemäß weisen die Laserringschweißnähte eine geneigte Laserringschweißnahtmittelachse auf. Die Laserringschweißnahtmittelachse schließt erfindungsgemäß mit einer Hauptlängsachse des Zylinderrohrs einen Laserringschweißnahtneigungswinkel alpha α ein, wobei alpha α 20 Grad bis 70 Grad beträgt. Die Laserringschweißnahtmittelachse verläuft mittig durch die Laserringschweißnaht und teilt deren Querschnitt in gleiche Teile. Wird die Laserringschweißnahtmittelachse bis zur Hauptlängsachse des Zylinderrohrs, welche mittig und längs des Zylinderrohrs verläuft, verlängert, schließt diese mit der Hauptlängsachse einen Winkel ein. Bei diesem Winkel handelt es sich um den Laserringschweißnahtneigungswinkel alpha α. Der Laserringschweißnahtneigungswinkel alpha α beträgt zwischen 20 Grad und 70 Grad, wodurch die Laserringschweißnahttiefe mit einem Verhältnis von 1,1 bis 2,5 zur Zylinderrohrwanddicke erzeugt wird. Durch die größere Laserringsschweißnahttiefe und die angestellte Ringschweißnahtmittelachse werden, durch Winkel und Angriffsfläche der angreifenden Kräfte, die Kräfte während einer Belastung besser verteilt.

Der erfindungsgemäße geschweißte Arbeitszylinder weist eine Reihe erheblicher Vorteile gegenüber Arbeitszylindern nach dem Stand der Technik auf.

Ein erster wesentlicher Vorteil liegt darin, dass insbesondere das Zylinderrohr über das Ablängen hinaus kaum oder überhaupt nicht spanend bearbeitet werden muss. So müssen insbesondere keine Gewinde geschnitten oder Nuten gedreht werden. Bei einer geschweißten Kolbeneinheit gilt dies entsprechend auch für die Kolbenstange.

Dadurch liegt zunächst der unmittelbare Vorteil vor, dass der sonst erforderliche Aufwand an Zeit, Bearbeitungsmaschinen, Werkzeugkosten und Energie für eine spanende Bearbeitung eingespart werden kann.

Weiterhin besteht der Vorteil einer drastischen Materialeinsparung und damit der Schonung von Rohstoffressourcen, weil das Zylinderrohr nur noch etwa die Hälfte der Rohrwandstärke eines geschraubten Differenzialarbeitszylinders aufweisen muss. Zulagen beispielsweise in der Rohrwandstärke zum Ausgleich des Materialabtrags für ein geschnittenes Gewinde können entfallen.

Durch den Entfall spanender Bearbeitung des Zylinderrohrs und vorzugsweise auch der Kolbenstange wird zudem die Qualität maßgeblich gesteigert. Die axiale Rundlaufgenauigkeit wird infolge des Entfalls von Krafteinträgen durch eine spanende Bearbeitung nicht mehr beeinträchtigt. Vielmehr bleibt die axiale Rundlaufgenauigkeit der Ausgangsprodukte für die Zylinderrohre und gegebenenfalls auch der Kolbenstangen vollständig erhalten. Damit weist der erfindungsgemäße Arbeitszylinder eine höhere Präzision auf. So kann auch die axiale Kolbenstangenbewegung ohne das nach dem Stand der Technik bekannte Problem des Ausknickens der Kolbenstangen im Endanschlag bereitgestellt werden. Damit wird zugleich der Verschleiß der Zylinderführungen im Führungsverschlussteil reduziert. Durch den Entfall der spanenden Bearbeitung von Zylinderrohr und gegebenenfalls Kolbenstange werden zugleich Minderungen der Belastbarkeit infolge von Kerbwirkungen vermieden.

Ein weiterer Vorteil liegt in der absoluten Dichtheit des Differenzialarbeitszylinders an den Verbindungsstellen zwischen Zylinderrohr und den Verschlussteilen. Vorteilhaft ist hierbei zudem, dass die Dichtheit ohne die sonst nach dem Stand der Technik erforderlichen Dichtungen bereitstellbar ist. Der mögliche Entfall dieser alterungsanfälligen Bauteile bewirkt neben Kosteneinsparungen eine Qualitätsverbesserung und eine Erhöhung der Lebensdauer. Zudem werden Verunreinigungen durch alternde Dichtungen ausgeschlossen.

Ein weiterer Vorteil liegt in der erhöhten Betriebssicherheit. Ein wie bei Gewinden mögliches axiales Bewegungsspiel zwischen Zylinderrohr und Verschlussteilen bei Lastwechseln oder eine Lockerung wie bei Gewinden entfällt. Weiterhin ergeben sich vorteilhaft Einsparungen durch den Entfall von sonst erforderlichen Sicherungselementen. Letztlich entfällt auch die sonst erforderliche Sicherung der eigentlichen Sicherungselemente, welche bei lösbaren Verbindungen erforderlich ist. Eine solche Sicherung erfolgt gemäß dem Stand der Technik beispielweise über ein Verkleben der Sicherungselemente. Der Entfall des Verklebens ist mit weiteren wichtigen Vorteilen verbunden. Zum Ersten entfallen die Kosten für die sehr teuren Schraubensicherungsklebstoffe. Zum zweiten entfallen die Reinigungen der Oberflächen für die Herstellung von deren Haftfähigkeit für die Schraubensicherungsklebstoffe, die nach dem Stand der Technik oft gesundheitsbedenkliche Reinigungschemikalien erfordern. Damit entfallen die besonderen Maßnahmen zur Absicherung des Gesundheitsschutzes und des Umweltschutzes. Zum dritten wird das Problem überwunden, dass auch durch Schraubensicherungsklebstoffe gesicherte lösbare Verbindungen bei Stoßbelastungen der Gefahr einer Lockerung unterliegen können.

Als ein Aspekt der erhöhten Betriebssicherheit ist auch die erhöhte Manipulationssicherheit anzuführen. Zerstörungsfreie Eingriffe in den Zylinderinnenraum sind ausgeschlossen. Mögliche Verletzungsquellen im Zusammenhang mit einer unsachgemäßen Öffnung oder einer unsachgemäßen Wiedermontage eines Differenzialarbeitszylinders durch ungeschultes Personal entfallen.

Der erfindungsgemäße Arbeitszylinder weist zudem Vorteile in der Fertigung auf. Insbesondere ist es möglich, beide Verschlussteile zu verschweißen, da nach dem Verschweißen im Gegensatz zu dem Stand der Technik kein Zugang mehr zu dem Zylinderinnenraum erforderlich ist. Dem liegt um ersten zu Grunde, dass es durch das Laserschweißverfahren es im Bereich der Laserringschweißnähte nur zu einer stark lokal begrenzten Erhitzung des Materials kommt. So können Bauteile mit thermisch anfälligen Materialien, wie insbesondere Dichtungen, in einer Nähe von wenigen Millimetern um die geplante Schweißnaht dennoch verschweißt werden, welche bei anderen Schweißverfahren geschädigt würden. Zudem werden Verzunderungen an den innenliegenden Oberflächenabschnitten des Zylinderrohr und der Verschlussteile, besonders in der Nähe der Schweißnähte, vermieden, welche sonst nach dem Stand der Technik aufwändig entfernt werden müssten. Zum Zweiten liegt dem zu Grunde, dass etwaige Materialemissionen aus dem Bereich der Laserringschweißnaht von dem vorgelagerten O-Ring in dem Ringraum zurückgehalten werden.

Vorzugsweise ermöglicht es der erfindungsgemäße Arbeitzylinder zudem, beide Verschlussteile in einem Arbeitsgang zu verschweißen.

Vorteilhaft ist ferner die Reduzierung thermischer Spannungen in den Kopplungspartnern der Schweißverbindung, da mittels des Laserschweißens lediglich eine relativ geringe Streckenenergie (Energiemenge bezogen auf die Schweißnahtlänge) eingebracht werden muss.

Ein weiterer Vorteil besteht darin, dass der Verlauf, die Schweißnahttiefe und der Winkel der Laserringschweißnähte weitestgehend durch die Bewegung, die Streckenenergie und den Winkel des Laserstrahls relativ zu dem herzustellenden Arbeitszylinder bestimmt werden kann. So kann der Verlauf und der Winkel insbesondere durch die Veränderung der Position des Lasers relativ zu den Kopplungspartnern gezielt ausgerichtet werden.

Besonders vorteilhaft ist zudem eine besonders hohe Lebensdauer, da die Laserringschweißnähte durch den vorgelagerten O-Ring weitgehend von dynamischen radialen Belastungen infolge des veränderlichen Arbeitsdrucks des Druckmediums und somit von mehrachsigen Spannungen ferngehalten wird. Da vorteilhaft ausschließliche axiale Belastungen lassen bei gleicher Dimensionierung eine deutlich höhere Anzahl von Lastwechseln und somit eine deutlich höhere Lebensdauer zu.

In einer ersten besonders bevorzugten Ausbildung des erfindungsgemäßen Arbeitszylinders liegt der Arbeitszylinder als doppelt wirkender Arbeitszylinder vor und ist als Differenzialarbeitszylinder ausgebildet.

In dieser Ausbildung ist das erste Verschlussteil als Führungsverschlussteil und das zweite Verschlussteil als Bodenverschlussteil ausgebildet. Daher wird hier das erste Zylinderrohrende als führungsseitiges Zylinderrohrende und das zweite Zylinderrohrende als bodenseitiges Zylinderrohrende bezeichnet. Die erste Laserringschweißnaht ist somit zwischen dem Führungsverschlussteil und dem führungsseitigen Zylinderrohrende und die zweite Laserringschweißnaht ist somit zwischen dem Bodenverschlussteil und dem bodenseitigen Zylinderrohrende angeordnet.

Die Kolbeneinheit weist bei dem Differenzialarbeitszylinder einen Kolben und eine Kolbenstange auf. Zu dem Aufbau der so ausgebildeten Kolbeneinheit wird auf die oben zum Arbeitszylinder vorliegenden Beschreibungsinhalte Bezug genommen.

Der Kolben der Kolbeneinheit ist in dem Zylinderinnenraum angeordnet und trennt so den Zylinderinnenraum in einen Kolbenbodenarbeitsraum, auch verkürzt als Kolbenbodenraum bezeichnet, und einen Kolbenstangenarbeitsraum, verkürzt auch als Kolbenstangenraum bezeichnet. Die in dem Kolbenbodenraum wirksame Fläche des Kolbens ist auf der kolbenbodenseitigen Seite des Kolbens größer als auf der kolbenstangenraumseitigen Seite des Kolbens. Bei gleichem Druck des Druckmediums wirkt somit kolbenbodenraumseitig eine größere Kraft auf den Kolben als kolbenstangenraumseitig. Eine auf den Kolben wirkende Kraft wird mittels der Kolbenstange aus dem Zylinderinnenraum nach außen übertragen, wofür die Kolbenstange das Führungsverschlussteil gleitend durchsetzt.

In einer zweiten besonders bevorzugten Ausbildung des erfindungsgemäßen Arbeitszylinder liegt der Arbeitszylinder ebenfalls als doppelt wirkender Arbeitszylinder vor; er ist hier jedoch als Gleichgangzylinder ausgebildet.

Bei dem Gleichgangzylinder gemäß dieser vorteilhaften Weiterbildung ist das erste Verschlussteil wie bei einem Differenzialarbeitszylinder als ein Führungsverschlussteil ausgebildet. Zudem ist als besonderes Merkmal auch das zweite Verschlussteil als ein weiteres Führungsverschlussteil ausgebildet. Das Führungsverschlussteil und das weitere Führungsverschlussteil werden nachfolgend zusammengefasst auch als die Führungsverschlussteile bezeichnet. Die erste Laserringschweißnaht ist somit zwischen dem Führungsverschlussteil und dem ersten Zylinderrohrende und die zweite Laserringschweißnaht ist somit zwischen dem weiteren Führungsverschlussteil und dem zweiten Zylinderrohrende angeordnet.

Die Kolbeneinheit weist auch hier einen Kolben und eine Kolbenstange auf. Der Kolben ist in dem Zylinderinnenraum angeordnet und trennt diesen in einen ersten und einen zweiten Kolbenstangenarbeitsraum. Hierzu überragt die Kolbenstange axial beidseitig den Kolben und wird beidseitig aus dem Kolbeninnenraum durch die Verschlussteile hindurch, die hier beide als Führungsverschlussteile vorliegen, aus dem Kolbeninnenraum herausgeführt. Somit durchsetzt die Kolbenstange gleitend beide Führungsverschlussteile.

Beide Kolbenstangenarbeitsräume weisen den gleichen Querschnitt und damit der Kolben beidseitig gleichgroße wirksame Angriffsflächen für das Druckmedium auf. Die auf den Kolben wirkende Kraft und die Länge des von dem Kolben ausgeführten Arbeitsweges ist gleich, unabhängig davon, ob ein bestimmter nach Druck und Volumen gleicher Druckstrom des Druckmediums den ersten oder den zweiten Kolbenstangenarbeitsraum beaufschlagt. Wegen dieses in beiden Betätigungsrichtungen gleichen Verhaltens wird der Gleichgangzylinder häufig auch als Lenkzylinder verwandt und deshalb auch als Lenkzylinder bezeichnet.

Entsprechend einer anderen Weiterbildung ist der Arbeitszylinder als ein Plungerzylinder ausgebildet. Hierbei handelt es sich um einen einfach wirkenden Arbeitszylinder.

Gemäß dieser Weiterbildung ist das erste Verschlussteil als ein Führungsverschlussteil und das zweite Verschlussteil als ein Bodenverschlussteil ausgebildet. Bei dem ersten Zylinderrohrende handelte es sich um ein führungsseitiges Zylinderrohrende und bei dem zweiten Zylinderrohrende um ein bodenseitiges Zylinderrohrende. Wie bei einem Differenzialarbeitszylinder ist die erste Laserringschweißnaht somit zwischen dem Führungsverschlussteil und dem führungsseitigen Zylinderrohrende und die zweite Laserringschweißnaht somit zwischen dem Bodenverschlussteil und dem bodenseitigen Zylinderrohrende angeordnet.

Die Kolbeneinheit ist bei dem Plungerzylinder durch einen Tauchkolben ausgebildet. Der Tauchkolben ist in dem Zylinderinnenraum angeordnet. In dem Zylinderinnenraum ist nur ein Arbeitsraum ausgebildet. Der Tauchkolben durchsetzt gleitend das Führungsverschlussteil. Bei einer Beaufschlagung des Arbeitsraums mit einem Druckstrom des Druckmediums wird der Tauchkolben entsprechend dem eingeführten Volumen des Druckstroms axial verdrängt und führt eine Ausfahrtbewegung aus. Die Einfahrtbewegung wird durch eine in umgekehrter Richtung von außen angreifende Kraft bewirkt.

Die Laserringschweißnähte weisen gemäß einer anderen vorteilhaften Weiterbildung eine Laserringschweißnahttiefe auf, welche zu einer Zylinderrohrwanddicke in einem Verhältnis von 1,1 bis 2,5 steht.

Verläuft die Laserringschweißnaht nicht senkrecht durch die Zylinderrohrwand, ist die Laserringschweißnahttiefe größer als die Dicke der Zylinderrohrwand.

So weist die Verbindung zwischen den Verschlussteilen besonders vorteilhaft eine höhere Stabilität auf, da die Kraftübertragung in der Schweißnaht auf eine größere Fläche verteilt und damit optimiert ist.

Daraus ergibt sich als ein weiterer Vorteil, dass die Rohrwandstärke des Zylinderrohrs für bestimmte Anwendungen weiter reduziert werden kann.

Die Erfindung wird als Ausführungsbeispiel anhand von
- Fig. 1: Differenzialarbeitszylinder (Übersicht)
- Fig. 2: Vergrößerungsausschnitt am führungsseitigen Zylinderrohrende mit Darstellung des Dichtungsringes und des Ringabschnitts
- Fig. 3: Vergrößerungsausschnitt am führungsseitigen Zylinderrohrende mit Darstellung des Ringschweißnahtneigungswinkels
- Fig. 4: Vergrößerung einer nicht erfindungsgemäßen Laserschweißnaht zur Darstellung des Querschnitts und des Ringschweißnahtwinkels beta
- Fig. 5: Plungerzylinder mit einer nicht erfindungsgemäßen 90 Grad-Schweißnaht und vorgelagertem O-Ring
- Fig. 6: Vergrößerungsausschnitt zu Fig. 5 zur Darstellung des O-Rings und des Ringabschnitts
- Fig. 7: Schematische Darstellung eines nicht erfindungsgemäßen Bodenverschlussteils mit 0 Grad-Schweißnaht näher erläutert.

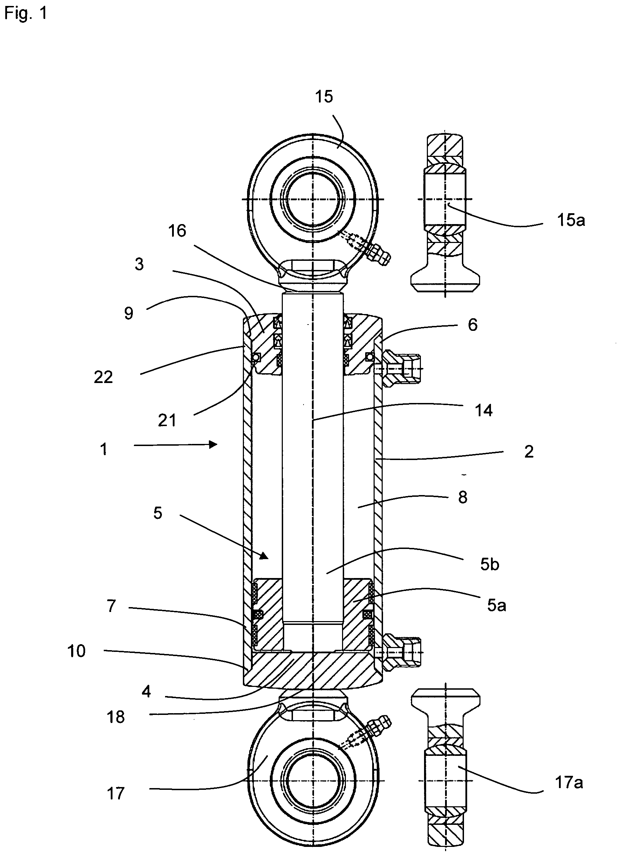

Fig. 1 zeigt eine Übersichtsdarstellung eines Ausführungsbeispiels des Arbeitszylinders 1 als Differenzialarbeitszylinder. Der Arbeitszylinder 1 weist des Zylinderrohr 2, das erste Verschlussteil 3, hier ausgebildet als Führungsverschlussteil, das zweite Verschlussteil 4, hier ausgebildet als Bodenverschlussteil, und die Kolbeneinheit 5 auf. Die Kolbeneinheit 5 setzt sich aus dem Kolben 5a und der Kolbenstange 5b zusammen.

In dieser Ausführung sind an der Kolbenstange 5b das kolbenstangenseitige Befestigungsmodul 15 und an dem als Bodenverschlussteil ausgebildeten zweiten Verschlussteil 4 das bodenseitige Befestigungsmodul 17 angeordnet. Den beiden Befestigungsmodule 15, 17 sind jeweils Befestigungsbolzen 15a, 17a, zugeordnet. Die Befestigungsmodule 15, 17 und die Befestigungsbolzen 15a, 17a sind nicht Bestandteil der Erfindung sind und lediglich zur besseren Übersicht dargestellt. Die Kolbeneinheit 5 ist bezogen auf den Kolben 5a und mit Abschnitten der Kolbenstange 5b im Zylinderinnenraum 8 angeordnet, wobei die Kolbenstange 5b das als Führungsverschlussteil ausgebildete erste Verschlussteil 3 gleitend durchsetzt. Das als Führungsverschlussteil ausgebildete erste Verschlussteil 3 verschließt das Zylinderrohr 2 an dem ersten Zylinderrohrende 6, hier dem führungsseitigen Zylinderrohrende und das als Bodenverschlussteil ausgebildete zweite Verschlussteil 4 verschließt das zweite Zylinderrohrende 7, hier das bodenseitige Zylinderrohrende. Die beiden Verschlussteile 3, 4 sind in dieser Ausführung so gestaltet, dass sie einen zylindrischen Abschnitt aufweisen, der passgenau in das Zylinderrohr hineinragt. Die beiden Zylinderrohrenden 6, 7 sind angeschrägt und besitzen somit eine größere Kontaktfläche zu den beiden Verschlussteilen 3, 4. An den Kontaktflächen verlaufen die Laserringschweißnähte 9, 10, wobei die erste Laserringschweißnaht 9 das erste Verschlussteil 3 mit dem ersten Zylinderrohrende 6 und die zweite Laserringschweißnaht 10 das zweite Verschlussteil 4 mit dem zweiten Zylinderrohrende 7 verbindet. Die Laserringschweißnähte 9, 10 bilden jeweils eine fluiddichte Dichtebene aus. Zusätzlich ist der ersten Laserringschweißnaht 9 axial in Richtung Zylindermitte vorgelagert ein umlaufender Dichtring 21 in einer Ringnut (ohne Bezugszeichen) des ersten Verschlussteils 3 angeordnet. Axial betrachtet zwischen dem Dichtring 21 und der Laserringschweißnaht 9 befindet sich der Ringababschnitt 22, hier als erster Ringabschnitt.

Die Hauptlängsachse 14 des Zylinderrohrs 2 verläuft mittig und längs durch den Arbeitszylinder 1.

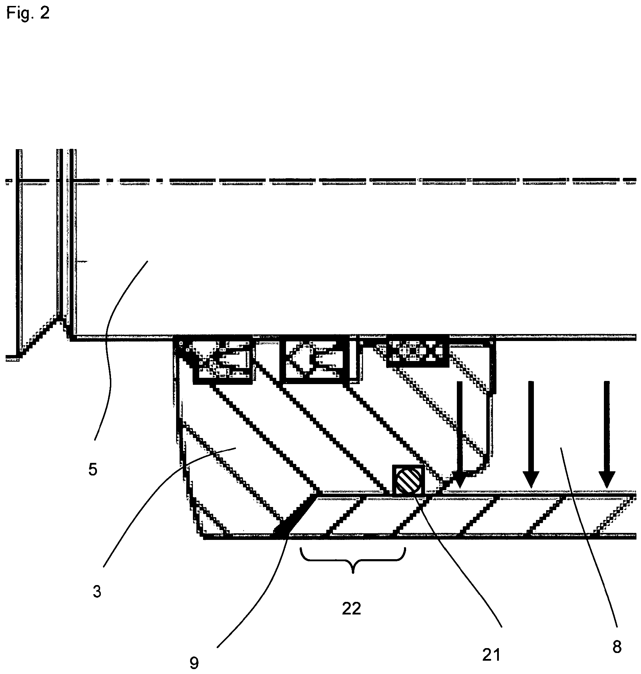

Fig. 2 zeigt eine Vergrößerungsausschnitt des Bereichs der ersten Laserringschweißnaht 9. Hier ist insbesondere der umlaufende Dichtring 21 in seiner Lagebeziehung zu dem Zylinderrohr 2, dem ersten Verschlussteil 3 und der ersten Laserringschweißnaht 9 dargestellt. Der umlaufende Dichtring 21 ist in einer umlaufenden Außenringnut des ersten Verschlussteils 3 eingelassen. Er dichtet den Bereich bis zur ersten Laserringschweißnaht 9 druckdicht von dem übrigen Zylinderinnenaum 8 ab. Die vertikal eingezeichneten Pfeile symbolisieren die radial von innen auf das Zylinderrohr 2 wirkenden Kräfte des Druckmediums, wobei der Ringabschnitt 22 von dieser radialen Krafteinwirkung durch die druckdichte Abtrennung mittels des umlaufenden Dichtrings 21 ausgenommen ist.

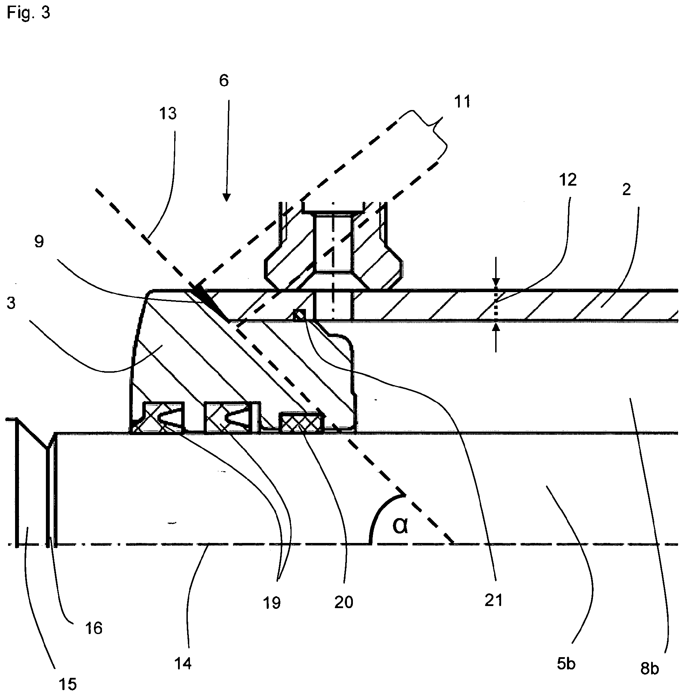

In Fig. 3 wird eine Vergrößerung des Bereichs des ersten Zylinderrohrendes 6 dargestellt. Es handelt sich hierbei wie in Fig. 2 um das führungsseitige Zylinderrohrende. Hier werden besonders die geometrischen Verhältnisse der ersten umlaufenden Laserringschweißnaht 9 dargestellt. Während des Verschweißens wird in dieser Ausführung mit einem Laser entlang der Ringschweißnahtmittelachse 13 die erste umlaufende Laserringschweißnaht 9 erzeugt. Diese verläuft entlang der Kontaktfläche zwischen dem ersten Zylinderrohrende 6 und dem ersten Verschlussteil 3. Hierzu wird vorzugsweise eine zuvor zusammengesetzte und temporär fixierte Vorbaugruppe aus dem Zylinderrohr 2, dem ersten Verschlussteil 3, dem zweiten Verschlussteil 4, der Kolbeneinheit 5 und den beiden Befestigungsmodulen 15, 17 um die Hauptlängsachse des Zylinderrohrs 14 sowie vor einem um den Ringschweißnahtneigungswinkel alpha geneigten Laser rotiert.

Die Ringschweißnahtmittelachse 13 verläuft mittig durch die erste umlaufende Laserringschweißnaht 9 und schließt in ihrer Verlängerung mit der Hauptlängsachse des Zylinderrohrs 14 den Ringschweißnahtneigungswinkel alpha α ein. Die Ringschweißnahttiefe 11 ist die Länge der Ringschweißnahtmittelachse 13, welche in der tatsächlichen Laserringschweißnaht 9 verläuft. Die Ringschweißnahttiefe 11 ist durch die Anwinkelung länger als die Zylinderrohrwanddicke 12. Die Ringschweißnahttiefe entspricht der Hypotenuse eines mittels der Ringschweißnaht, der Zylinderrohrwanddicke 12 und einer Lotrechten gebildeten rechtwinkligen Dreiecks. In dieser Darstellung ist ferner die erste Befestigungsmodulschweißnaht 16 zwischen dem kolbenstangenseitigen Befestigungsmodul 15 und der Kolbenstange 5b ersichtlich. Diese wird mit demselben Laserschweißverfahren wie die erste umlaufende Laserringschweißnaht 9 erzeugt.

Weiterhin ist auch die gleitende Lagerung der Kolbenstange 5b im als Führungsverschlussteil ausgebildeten ersten Verschlussteil 3 mit Führung 20 und Dichtung 19 dargestellt.

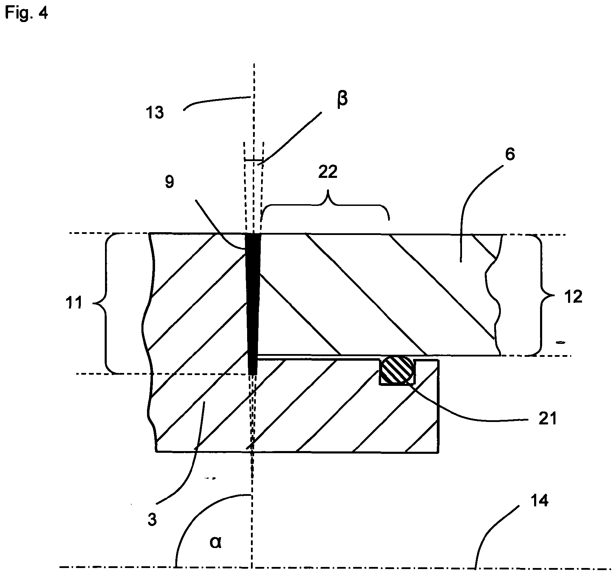

In Fig. 4 wird eine nicht erfindungsgemäße Laserschweißnaht vergrößert dargestellt. Die hier dargestellte erste Laserschweißnaht 9, zwischen dem ersten Zylinderrohrende 2 und dem ersten Verschlussteil 3, zeigt exemplarisch eine Laserschweißnaht auf.

Diese erste Laserschweißnaht 9 besitzt eine Ringschweißnahttiefe 11 und eine Ringschweißnahtmittelachse 13. In dieser Ausführung ist die Ringschweißnahttiefe 11 größer als die Zylinderrohrwanddicke 12.

Die Laserschweißnaht weist eine leichte Konizität auf. Legt man zwei Tangenten an die Randkontur der Laserschweißnaht so schneiden sich diese und schließen einen Ringschweißnahtwinkel beta β ein. Die Ringschweißnahtmittelachse 13 ist gleichzeitig die Winkelhalbierende des Ringschweißnahtwinkels beta β und schließt mit der Hauptlängsachse 14 den Ringschweißnahtneigungswinkel alpha α ein. Weiterhin verläuft die Ringschweißnahtmittelachse 13 entlang der Kontaktfläche von erstem Zylinderrohrende 6 und erstem Verschlussteil 3.In dieser Ausführung beträgt der Ringschweißnahtneigungswinkel alpha 90 Grad.

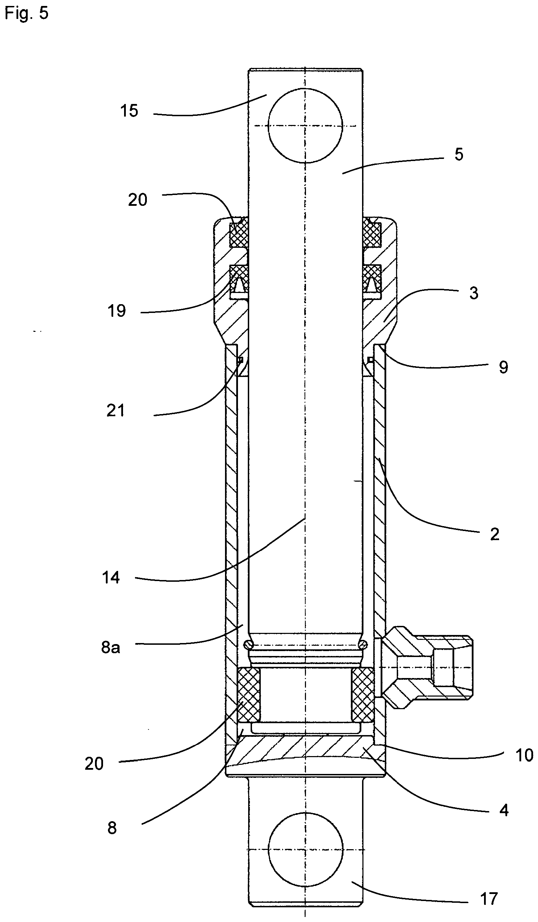

In Fig. 5 wird ein Ausführungsbeispiel eines nicht erfindungsgemäßen Arbeitszylinders, welcher als Plungerarbeitszylinder ausgeführt ist, dargestellt. Hierbei wird die Kolbeneinheit 5, welche als ein Tauchkolben ausgebildet ist, in dem Zylinderrohr 2 geführt. Zudem wird die Kolbeneinheit 5 in dem ersten Verschlussteil 3, welches als Führungsverschlussteil ausgebildet ist, geführt. Hierzu weist der Plungerzylinder die Führungen 20 auf. Das Führungsverschlussteil ist mittels der ersten Laserringschweißnaht 9 mit dem Zylinderrohr 2 an dessen erstem Zylinderrohrende 6 verbunden. Dem Führungsverschlussteil gegenüberliegend ist das zweite Verschlussteil 4, hier ausgebildet als Bodenverschlussteil, an dem zweiten Zylinderrohrende 7 mit dem Zylinderrohr 2 durch die zweite Laserringschweißnaht 10 verbunden. In diesem Ausführungsbeispiel weisen beide Laserringschweißnähte 9, 10 einen Ringschweißnahtneigungswinkel von 90 Grad auf.

Ergänzend gelten die in Fig. 1 zu einem Differenzialarbeitszylinder aufgeführten Bezugszeichen und Beschreibungsinhalte.

Der Plungerarbeitszylinder in dem Ausführungsbeispiel gemäß Fig. 5 weist zudem einen zusätzlichen ersten umlaufenden Dichtring 21 an dem ersten Verschlussteil 3 auf. Dieser zusätzliche Dichtring 21 wird auch als O-Ring bezeichnet und ist radial zwischen dem Zylinderohr 2 und dem ersten Verschlussteil 3 angeordnet und stellt eine druckdichte Dichtung bereit, welche die zweite umlaufende Laserringschweißnaht 10 gegen das Druckmedium druckdicht abtrennt.

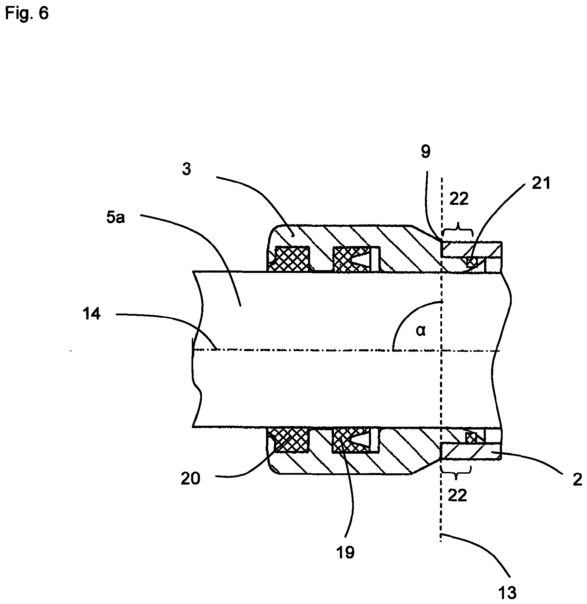

In Fig. 6 ist der Bereich des Dichtrings 21 (O-Ring) an dem ersten Verschlussteil 3 aus Fig. 5 vergrößert dargestellt. Der Dichtring 21 (O-Ring) ist hier detaillierter dargestellt und befindet sich in räumliche Nähe zu der ersten umlaufenden Laserringschweißnaht 9. Der Dichtring 21(O-Ring) besteht in dieser Ausführung aus einem elastischen Polymer. Der Wärmeeintrag beim Laserschweißen bleibt hinreichend gering, um den Dichtring 21(O-Ring) trotz des Nahbereichs zur ersten Laserringschweißnaht 9 nicht zu beschädigen. Axial betrachtet befindet sich zwischen dem Dichtring 21 (O-Ring) und der ersten Laserringschweißnaht 9 ein druckgetrennter Ringabschnitt 22. In diesem druckgetrennten Ringabschnitt 22 liegt zylinderrohrinnenseitig der Betriebsdruck des Druckmediums nicht an, so dass von dem Druckmedium in diesem Bereich radial keine Kräfte auf das Zylinderrohr 2 wirken. Damit wird in diesem Bereich das Zylinderohr 2 nicht mit Beulungskräften belastet und die erste Laserringschweißnaht 9 entlastet.

In dieser Ausführung verläuft die Ringschweißnahtmittelachse 13 senkrecht zur Hauptlängsachse 14 des Arbeitszylinders 1.

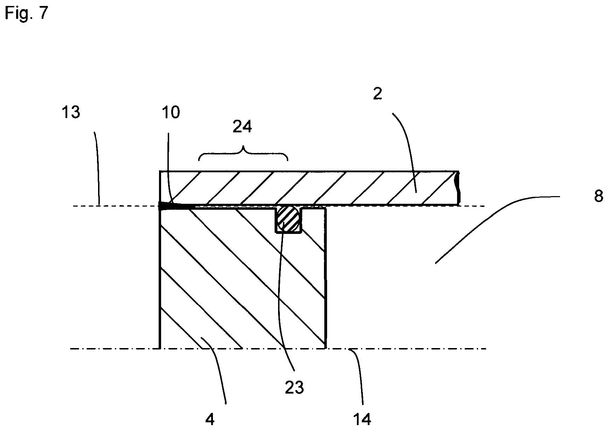

Fig. 7 zeigt eine schematische Darstellung eines Ausschnitts eines nicht erfindungsgemäßen Ausführungsbeispiels, bei welchem die zweite umlaufende Laserringschweißnaht 10 parallel zur Hauptlängsachse verläuft.

Dabei wird das zweite Verschlussteil 4, ausgebildet als Bodenverschlussteil, radial von dem zweiten Zylinderrohr 2 umfasst. Dabei bilden im Ausführungsbeispiel das zweite Verschlussteil 4 und die Ringfläche des Zylinderohrs 2 eine gemeinsame Stirnfläche aus. Es ist aber auch möglich, dass einer der Kopplungspartner gegenüber dem anderen Kopplungspartner axial übersteht oder zurückspringt.

Die Ringschweißnahtmittelachse 13 schneidet die Hauptlängsachse 14 nicht. Der Ringschweißnahtneigungswinkel alpha α beträgt 0 Grad. Der zweite umlaufende Dichtring 23 bildet bis zur Schweißwurzel der zweiten Laserringschweißnaht 10 einen axialen Abschnitt aus, bei dem es sich um den zweiten druckgetrennten Ringabschnitt 24 handelt. Der zweite umlaufende Dichtring 23 und der zweite druckgetrennte Ringabschnitt 24 sind in gleicher Weise wie der erste umlaufende Dichtring 21 und der erste druckgetrennte Ringabschnitt 22 ausgebildet, so dass die Beschreibungsinhalte dort in entsprechender Weise auch hier gelten.

### Verwendete Bezugszeichen

- 1: Arbeitszylinder
- 2: Zylinderrohr
- 2a: weiteres Zylinderrohr
- 3: erstes Verschlussteil
- 3a: weiteres Verschlussteil
- 4: zweites Verschlussteil
- 5: Kolbeneinheit
- 5a: Kolben
- 5b: Kolbenstange
- 6: erstes Zylinderrohrende
- 7: zweites Zylinderrohrende
- 8: Zylinderinnenraum
- 8a: Kolbenbodenarbeitsraum
- 8b: Kolbenstangenarbeitsraum
- 9: erste umlaufende Laserringschweißnaht
- 10: zweite umlaufende Laserringschweißnaht
- 11: Ringschweißnahttiefe
- 12: Zylinderrohrwanddicke
- 13: Ringschweißnahtmittelachse
- 14: Hauptlängsachse
- 15: kolbenstangenseitiges Befestigungsmodul
- 15a: Befestigungsbolzen des kolbenstangenseitigen Befestigungsmoduls
- 16: erste Befestigungsmodulschweißnaht
- 17: bodenseitiges Befestigungsmodul
- 17a: Befestigungsbolzen des bodenseitigen Befestigungsmoduls
- 18: zweite Befestigungsmodulschweißnaht
- 19: Dichtung
- 20: Führung
- 21: erster umlaufender Dichtring
- 22: erster druckgetrennter Ringabschnitt
- 23: zweiter umlaufende Dichting
- 24: zweiter druckgetrennter Ringabschnitt
- α: Ringschweißnahtneigungswinkel alpha
- β: Ringschweißnahtwinkel beta

## Patentansprüche

1. Arbeitszylinder (1),
aufweisend ein Zylinderrohr (2) mit einer Hauptlängsachse, ein erstes Verschlussteil (3), ein zweites Verschlussteil (4) und eine Kolbeneinheit (5),
wobei das Zylinderrohr (2) ein erstes Zylinderrohrende (6) und ein zweites Zylinderrohrende (7) aufweist,
wobei das erste Verschlussteil (3) an dem ersten Zylinderrohrende (6) angeordnet ist,
wobei das zweite Verschlussteil (4) an dem zweiten Zylinderrohrende angeordnet (7) ist,
wobei das Zylinderrohr (2) und die Verschlussteile (3, 4) einen Zylinderinnenraum (8) ausbilden,
wobei die Kolbeneinheit (5) axial, entlang der Hauptlängsachse verschieblich in dem Zylinderinnenraum (8) angeordnet ist und mindestens einen Arbeitsraum in dem Zylinderinnenraum (8) ausbildet,
wobei die Kolbeneinheit (5) das erste Verschlussteil (3) gleitend durchsetzt, wobei das erste Verschlussteil (3) mit dem Zylinderrohr (2) mittels einer ersten umlaufenden Laserringschweißnaht (9) und das zweite Verschlussteil (4) mit dem Zylinderrohr (2) mittels einer zweiten umlaufenden Laserringschweißnaht (10) stoffschlüssig verbunden ist,
wobei die Laserringschweißnähte (9, 10) jeweils eine fluiddichte Dichtebene ausbilden, **dadurch gekennzeichnet, dass** die Laserringschweißnähte (9, 10) jeweils eine Ringschweißnahtmittelachse (13) aufweisen,wobei die Ringschweißnahtmittelachse (13) mit einer Hauptlängsachse (14) des Zylinderrohrs (2) einen Ringschweißnahtneigungswinkel alpha (α) einschließt, wobei alpha (α) 20 bis 70 Grad beträgt, und
dass in dem Zylinderinnenraum (8) zwischen dem ersten Verschlussteil (3) und einer Zylinderrohrinnenwandung des Zylinderrohrs (2) an dessen erstem Zylinderrohrende (6) axial beabstandet von der ersten Laserringschweißnaht (9) ein erster umlaufender Dichtring (21) angeordnet ist, der einen ersten druckgetrennten Ringabschnitt (22), angeordnet zwischen dem ersten umlaufenden Dichtring (21) und der ersten Laserringschweißnaht (9), ausbildet und/oder in dem Zylinderinnenraum (8) zwischen dem zweiten Verschlussteil (4) und einer Zylinderrohrinnenwandung des Zylinderrohrs (2) an dessen zweitem Zylinderrohrende (7) axial beabstandet von der zweiten Laserringschweißnaht (10) ein zweiter umlaufender Dichtring (23) angeordnet ist, der einen zweiten druckgetrennten Ringabschnitt (24), angeordnet zwischen dem zweiten umlaufenden Dichtring (23) und der zweiten Laserringschweißnaht (10), ausbildet.

2. Arbeitszylinder (1) nach Anspruch 1,
**dadurch gekennzeichnet,**
**dass** der Arbeitszylinder (1) doppelt wirkend und als Differenzialarbeitszylinder ausgebildet ist,
wobei das erste Verschlussteil (3) als Führungsverschlussteil und das zweite Verschlussteil (4) als Bodenverschlussteil ausgebildet ist,
wobei es sich bei dem ersten Zylinderrohrende (6) um ein führungsseitiges Zylinderrohrende und bei dem zweiten Zylinderrohrende (7) um ein bodenseitiges Zylinderrohrende handelt,
wobei die Kolbeneinheit (5) einen Kolben (5a) und eine Kolbenstange (5b) aufweist,
wobei der Kolben (5a) in dem Zylinderinnenraum (8) angeordnet ist und den Zylinderinnenraum (8) in einen Kolbenbodenarbeitsraum (8a) und einen Kolbenstangenarbeitsraum (8b) trennt und wobei die Kolbenstange (5b) das Führungsverschlussteil (3) gleitend durchsetzt.

3. Arbeitszylinder (1) nach Anspruch 1,
**dadurch gekennzeichnet,**
**dass** der Arbeitszylinder (1) doppelt wirkend und als Gleichgangzylinder ausgebildet ist,
wobei das erste Verschlussteil (3) als Führungsverschlussteil und das zweite Verschlussteil (4) als weiteres Führungsverschlussteil ausgebildet ist, wobei die Kolbeneinheit (5) einen Kolben (5a) und eine Kolbenstange (5b) aufweist,
wobei der Kolben (5a) in dem Zylinderinnenraum (8) angeordnet ist und den Zylinderinnenraum (8) in einen ersten Kolbenstangenarbeitsraum und einen zweiten Kolbenstangenarbeitsraum trennt und wobei die Kolbenstange (5b) das Führungsverschlussteil und das weitere Führungsverschlussteil gleitend durchsetzt.

4. Arbeitszylinder (1) nach Anspruch 1,
**dadurch gekennzeichnet,**
**dass** der Arbeitszylinder (1) einfach wirkend und als Plungerzylinder ausgebildet ist,
wobei das erste Verschlussteil (3) als Führungsverschlussteil und das zweite Verschlussteil (4) als Bodenverschlussteil ausgebildet ist,
wobei es sich bei dem ersten Zylinderrohrende (6) um ein führungsseitiges Zylinderrohrende und bei dem zweiten Zylinderrohrende (7) um ein bodenseitiges Zylinderrohrende handelt,
wobei die Kolbeneinheit (5) durch einen Tauchkolben ausgebildet ist, wobei der Tauchkolben in dem Zylinderinnenraum (8) angeordnet ist und in dem Zylinderinnenraum (8) einen Arbeitsraum ausbildet und wobei der Tauchkolben das Führungsverschlussteil (3) gleitend durchsetzt.

5. Arbeitszylinder (1) nach einem der vorhergehenden Ansprüche,
**dadurch gekennzeichnet,**
**dass** die Laserringschweißnähte jeweils eine Ringschweißnahttiefe (11) aufweisen,
wobei die Ringschweißnahttiefe (11) zu einer Zylinderrohrwanddicke (12) ein Verhältnis von 1,1 bis 2,5 aufweist.

## Claims

1. A working cylinder (1),
comprising a cylinder tube (2) with a main longitudinal axis, a first closure part (3), a second closure part (4) and a piston unit (5),
wherein the cylinder tube (2) comprises a first cylinder tube end (6) and a second cylinder tube end (7),
wherein the first closure part (3) is arranged at the first cylinder tube end (6), wherein the second closure part (4) is arranged at the second cylinder tube end (7),
wherein the cylinder tube (2) and the closure parts (3, 4) form a cylinder interior (8),
wherein the piston unit (5) is arranged axially displaceable along the main longitudinal axis in the cylinder interior (8) and forms at least one working chamber in the cylinder interior (8),
wherein the piston unit (5) slidingly passes through the first closure part (3), wherein the first closure part (3) is connected in a positive substance manner to the cylinder tube (2) by means of a first circumferential laser ring weld seam (9) and the second closure part (4) is connected to the cylinder tube (2) by means of a second circumferential laser ring weld seam (10), wherein the laser ring weld seams (9, 10) each form a fluid-tight sealing plane, **characterized in that** the laser ring weld seams (9, 10) each have a ring weld seam centre axis (13), wherein the ring weld seam centre axis (13) and a main longitudinal axis (14) of the cylinder tube (2) enclose a ring weld seam inclination angle alpha (a), wherein alpha (a) is 20 to 70 degrees, and that a first circumferential sealing ring (21) is arranged in the cylinder interior (8) between the first closure part (3) and a cylinder tube inner wall of the cylinder tube (2) at its first cylinder tube end (6), axially spaced from the first laser ring weld seam (9), and forms a first pressure-separated ring section (22) which is arranged between the first circumferential sealing ring (21) and the first laser ring weld seam (9), and/or a second circumferential sealing ring (23) is arranged in the cylinder interior (8) between the second closure part (4) and a cylinder tube inner wall of the cylinder tube (2) at its second cylinder tube end (7), axially spaced from the second laser ring weld seam (10), and forms a second pressure-separated ring section (24) which is arranged between the second circumferential sealing ring (23) and the second laser ring weld seam (10).

2. The working cylinder (1) according to claim 1,
**characterized in**
**that** the working cylinder (1) is double-acting and designed as a differential working cylinder,
wherein the first closure part (3) is designed as a guide closure part and the second closure part (4) is designed as a base closure part,
wherein the first cylinder tube end (6) is a guide-side cylinder tube end and the second cylinder tube end (7) is a base-side cylinder tube end, wherein the piston unit (5) comprises a piston (5a) and a piston rod (5b), wherein the piston (5a) is arranged in the cylinder interior (8) and separates the cylinder interior (8) into a piston crown working chamber (8a) and a piston rod working chamber (8b), and wherein the piston rod (5b) slidingly passes through the guide closure part (3)

3. The working cylinder (1) according to claim 1,
**characterized in**
**that** the working cylinder (1) is double-acting and designed as a double-rod cylinder,
wherein the first closure part (3) is designed as a guide closure part and the second closure part (4) is designed as a further guide closure part, wherein the piston unit (5) comprises a piston (5a) and a piston rod (5b), wherein the piston (5a) is arranged in the cylinder interior (8) and separates the cylinder interior (8) into a first piston rod working chamber and a second piston rod working chamber, and wherein the piston rod (5b) slidingly passes through the guide closure part and the further guide closure part.

4. The working cylinder (1) according to claim 1,
**characterized in**
**that** the working cylinder (1) is single-acting and designed as a plunger cylinder,
wherein the first closure part (3) is designed as a guide closure part and the second closure part (4) is designed as a bottom closure part,
wherein the first cylinder tube end (6) is a guide-side cylinder tube end and the second cylinder tube end (7) is a base-side cylinder tube end,
wherein the piston unit (5) is formed by a plunger piston,
wherein the plunger piston is arranged in the cylinder interior (8) and forms a working chamber in the cylinder interior (8), and wherein the plunger piston slidingly passes through the guide closure part (3).

5. The working cylinder (1) according to one of the preceding claims,
**characterized in that**
the laser ring weld seams each have a ring weld seam depth (11),
wherein the ring weld seam depth (11) has a ratio of 1.1 to 2.5 to a cylinder tube wall thickness (12).

## Revendications

1. Cylindre de travail (1),
présentant un tube cylindrique (2) ayant un axe longitudinal principal, un premier élément de fermeture (3), un deuxième élément de fermeture (4) et une unité de piston (5),
où le tube cylindrique (2) comprend une première extrémité du tube cylindrique (6) et une deuxième extrémité du tube cylindrique (7),
où le premier élément de fermeture (3) est disposé sur la première extrémité du tube cylindrique (6),
où le deuxième élément de fermeture (4) est disposé sur la deuxième extrémité du tube cylindrique (7),
où le tube cylindrique (2) et les éléments de fermeture (3, 4) forment un espace intérieur de cylindre (8),
où l'unité de piston (5) est disposée de manière à pouvoir coulisser axialement dans l'espace intérieur de cylindre (8) le long de l'axe longitudinal principal et forme au moins un espace de travail dans l'espace intérieur de cylindre,
où l'unité de piston (5) traverse de manière coulissante le premier élément de fermeture (3),
où le premier élément de fermeture (3) est relié par matière au tube cylindrique (2) au moyen d'une première soudure annulaire au laser (9) périphérique et le deuxième élément de fermeture (4) est relié par matière au tube cylindrique (2) au moyen d'une deuxième soudure annulaire au laser (10) périphérique,
où les soudures annulaires au laser (9, 10) forment respectivement un plan d'étanchéité (10) étanche aux fluides, est **caractérisé en ce que** les soudures annulaires au laser (9, 10) présentent chacune un axe central de soudure annulaire (13), où l'axe central de soudure annulaire (13) forme avec l'objet longitudinal principal (14) un angle d'inclinaison de soudure annulaire alpha (α), où alpha (α) est de 20 à 70 degrés,
et qu'une première bague d'étanchéité périphérique (21) est disposée dans l'espace intérieur de cylindre (8) entre le premier élément de fermeture (3) et une paroi intérieure du tube cylindrique (2) à sa première extrémité du tube cylindrique (6) à une distance axiale de la première soudure annulaire au laser (9), laquelle bague d'étanchéité comprend une première section annulaire (22) séparée par pression, disposée entre la première bague d'étanchéité périphérique (21) et la première soudure annulaire au laser (9), et/ou **en ce que**, dans l'espace intérieur (8) du cylindre, entre le deuxième élément de fermeture (4) et une paroi intérieure du tube cylindrique (2), à la deuxième extrémité (7) de ce dernier, est disposée, à distance axiale de la deuxième soudure annulaire au laser (10), une deuxième bague d'étanchéité périphérique (23) qui forme une deuxième section annulaire séparée par pression, disposée entre la deuxième bague d'étanchéité périphérique (23) et la deuxième soudure annulaire au laser (10).

2. Cylindre de travail (1) selon la revendication 1
est **caractérisé en ce**
**que** le cylindre de travail (1) est à double effet et conçu comme cylindre de travail différentiel,
où le premier élément de fermeture (3) est conçu comme un élément de fermeture de guidage et le deuxième élément de fermeture (4) est conçu comme un élément de fermeture de fond,
où la première extrémité de tube cylindrique (6) est une extrémité de tube cylindrique côté guidage et la deuxième extrémité de tube cylindrique (7) est une extrémité de tube cylindrique côté fond,
où l'unité de piston (5) présente un piston (5a) et une tige de piston (5b), où le piston (5a) est disposé dans l'espace intérieur (8) du cylindre et sépare l'espace intérieur (8) du cylindre en un espace de travail de tête de piston (8a) et un espace de travail de tige de piston (8b) et où la tige de piston (5b) traverse de manière coulissante l'élément de fermeture de guidage (3).

3. Cylindre de travail (1) selon la revendication 1
est **caractérisé en ce**
**que** le cylindre de travail (1) est à double effet et conçu comme cylindre synchronisé,
où le premier élément de fermeture (3) est conçu comme un élément de fermeture de guidage et le deuxième élément de fermeture (4) est conçu comme un autre élément de fermeture de guidage,
où l'unité de piston (5) présente un piston (5a) et une tige de piston (5b), où le piston (5a) est disposé dans l'espace intérieur (8) du cylindre et sépare l'espace intérieur (8) du cylindre en un premier espace de travail de tige de piston et un deuxième espace de travail et où la tige de piston (5b) traverse de manière coulissante l'élément de fermeture de guidage et l'autre élément de fermeture de guidage.

4. Cylindre de travail (1) selon la revendication 1
est **caractérisé en ce**
**que** le cylindre de travail (1) est à simple effet et conçu comme cylindre plongeur,
où le premier élément de fermeture (3) est conçu comme un élément de fermeture de guidage et le deuxième élément de fermeture (4) est conçu comme un élément de fermeture de fond,
où la première extrémité de tube cylindrique (6) est une extrémité de tube cylindrique côté guidage et la deuxième extrémité de tube cylindrique (7) est une extrémité de tube cylindrique côté fond,
où l'unité de piston (5) est formée par un piston plongeur,
où le piston plongeur est disposé dans l'espace intérieur (8) du cylindre et forme un espace de travail dans l'espace intérieur (8) du cylindre, et où le piston plongeur traverse de manière coulissante l'élément de fermeture de guidage (3).

5. Cylindre de travail (1) suivant une des revendications précédentes
est **caractérisé en ce**
**que** les soudures annulaires au laser présentent chacun une profondeur de la soudure annulaire (11),
où la profondeur de la soudure annulaire (11) présente un rapport de 1,1 à 2,5 par rapport à une épaisseur de paroi de tube cylindrique (12).
